(19) Europäisches Patentamt
European Patent Office
Office européen des brevets

(11) Publication number : **0 560 485 A1**

(12) # EUROPEAN PATENT APPLICATION

(21) Application number : **93300843.5**

(51) Int. Cl.$^5$ : **C04B 41/52**

(22) Date of filing : **04.02.93**

(30) Priority : **24.02.92 US 840227**

(43) Date of publication of application :
**15.09.93 Bulletin 93/37**

(84) Designated Contracting States :
**DE FR GB**

(71) Applicant : **DOW CORNING CORPORATION**
**3901 S. Saginaw Road**
**Midland Michigan 48686-0994 (US)**

(72) Inventor : **Baney, Ronald Howard**
**5704 Lantern Lane**
**Midland, Michigan (US)**
Inventor : **Gentle, Theresa Eileen**
**2319 Quail Run Drive**
**Midland, Michigan (US)**

(74) Representative : **Horton, Sophie Emma et al**
**Elkington and Fife Prospect House 8**
**Pembroke Road**
**Sevenoaks, Kent TN13 1XR (GB)**

(54) **Silicone infiltrated ceramic nanocomposite coatings.**

(57) The present invention relates to a ceramic nanocomposite comprising a porous ceramic coating having a silicone polymer within the pores. In a preferred embodiment of the invention, the ceramic coating is a protective coating on an electronic device.

EP 0 560 485 A1

The present invention relates to ceramic nanocomposite coatings which comprise porous ceramic coatings infiltrated with silicone polymers. In a preferred embodiment of the invention, the nanocomposites are used as protective coatings to inhibit degradative corrosion.

Ceramic composites and methods for their production are known in the art. Such composites generally comprise a continuous matrix phase which surrounds a reinforcing phase. Typically, the matrix phase comprises materials such as ceramics, metals and glasses and the reinforcing phase comprises fillers (eg., whiskers, powders, etc.) or fibers which improve the strength of the matrix. By contrast, the nanocomposites of the present invention comprise porous ceramic phases which surround silicone polymers.

Composite structures comprising porous ceramics impregnated with various materials are also known in the art. For instance, U.S. Patent No. 4,932,438 describes valve bodies made of porous ceramic materials impregnated with lubricants, including silicone resins. This reference, however, does not describe impregnated ceramic coatings.

Ceramic coatings are also known in the art. For instance, Haluska et al. in U.S. Patent No. 4,756,977 describes a process for forming a ceramic coating on a substrate comprising diluting hydrogen silsesquioxane resin in a solvent, applying the solution to a substrate, evaporating the solvent and heating the coated substrate to a temperature of about 150 to about 1000°C. Depending on the processing technique used, however, such coatings can be quite porous and, thus, allow the permeation of undesirable materials. For instance, when the silica coatings of Haluska et al. are applied to an electronic device, they can allow water, oxygen and chloride ions to reach the surface of the device and thereby cause corrosion.

The use of silicone as an encapsulant and a coating agent is also known in the art. For instance, silicone gels and resins are used in the electronics industry to protect electronic devices from the environment. Such silicones, however, often allow contaminants such as water and various ions to reach the surface of the substrate. These contaminants, in turn, cause the coating to blister and thereby lose its effectiveness.

What was not described in the prior art are nanocomposites which comprise porous ceramic coatings infiltrated with silicone polymers. The inventors herein have discovered that such nanocomposites have many desirable properties.

The present invention relates to a ceramic nanocomposite. The nanocomposite comprises a porous ceramic coating having a silicone polymer within the pores. In a preferred embodiment of the invention the ceramic coating is a protective ceramic coating on a substrate such as an electronic device which is prone to corrosion. The present invention also relates to a method of making such nanocomposites.

The present invention is based on the unexpected discovery that the infiltration of porous ceramic coatings with silicone polymers yields novel nanocomposites with desirable properties. The inventors herein postulate that the ceramic coating provides a more permanent bond for the silicone polymer (i.e., the polymer cannot blister) and the silicone polymer plugs the pores of the ceramic coating to prevent transport of impurities (i.e., the coating becomes less permeable). The present nanocomposite system, therefore, takes advantage of the benefits of both the ceramic and the silicone phase and eliminates some of their disadvantages. The resultant nanocomposites are particularly useful as protective coatings on substrates such as metals or electronic devices which are prone to corrosion.

In the present invention, a 'porous ceramic' is one which contains voids of a sufficient size to allow infiltration of the silicone polymer. Such voids can include pores, pinholes, cracks, etc; a 'preceramic compound' is any compound which can be converted to a porous ceramic coating by pyrolysis; a 'preceramic coating' is a coating of a preceramic compound on a substrate; and an 'electronic device' or 'electronic circuit' includes, but is not limited to, silicon based devices, gallium arsenide based devices, focal plane arrays, opto-electronic devices, photovoltaic cells and optical devices.

The novel nanocomposite coatings of the present invention are generally formed by a process which comprises applying a coating comprising a preceramic compound to the surface of a substrate; converting the preceramic coating to a porous ceramic coating by heating it to a temperature sufficient to converts it into the porous ceramic coating; and infiltrating the porous ceramic coating with a silicone polymer.

The preceramic compounds which can be used in the process of this invention include those which can be converted to a porous ceramic with the application of heat. These ceramics generally form the "continuous" phase of the ceramic nanocomposite. These compounds can be precursors to a variety of ceramics including, for example, oxides such as $SiO_2$, $Al_2O_3$, $TiO_2$ or $ZrO_2$, nitrides such as silicon nitride or titanium nitride, oxynitrides such as $SiO_xN_y$ or $AlO_xN_y$, oxycarbides such as SiOC, carbonitrides such as SiCN, sulfides such as $TiS_2$ or $GeS_2$, carbides such as SiC, diamond-like coatings, amorphous silica or any combination of the above. Particularly preferred in the present invention is the use of preceramic silicon-containing compounds or polymers.

The preferred preceramic compounds to be used in the process of this invention are ceramic oxide precursors and, of these, precursors to $SiO_2$ or combinations of $SiO_2$ precursors with other oxide precursors are

especially preferred. The silica precursors which may be used in the invention include, but are not limited to, hydrogen silsesquioxane resin (H-resin), hydrolyzed or partially hydrolyzed $R_xSi(Z)_{4-x}$ or combinations of the above, in which R is an aliphatic, alicyclic or aromatic substituent of 1-20 carbon atoms such as an alkyl (e.g., methyl, ethyl, propyl), alkenyl (e.g., vinyl or allyl), alkynyl (e.g., ethynyl), cyclopentyl, cyclohexyl, phenyl etc., Z is a hydrolyzable substituent such as a halogen (Cl, F, Br, I) or (OR) (e.g., methoxy, ethoxy, phenoxy, acetoxy, etc.) and x is 0-2.

H-resin is used in this invention to describe a variety of hydridosilane resins which may be either fully condensed or those which may be only partially hydrolyzed and/or condensed. Exemplary of fully condensed H-resins are those formed by the process of Frye et al. in U.S. Patent No. 3,615,272. This polymeric material has units of the formula $(HSiO_{3/2})_n$ in which n is generally 10-1000. The resin has a number average molecular weight of from about 800-2900 and a weight average molecular weight of between about 8000-28,000 (obtained by GPC analysis using polydimethylsiloxane as a calibration standard). When heated sufficiently, this material yields a ceramic coating essentially free of SiH bonds.

Exemplary H-resin which may not be fully condensed (polymers containing units of the formula $HSi(OH)_xO_{(3-x)/2}$) include those of Bank et al. in U.S. Patent No. 5,010,159 or those of Weiss et al. in U.S. Patent No. 4,999,397. Bank et al. describes a process which comprises hydrolyzing hydridosilanes in an arylsulfonic acid hydrate hydrolysis medium to form a resin which is then contacted with a neutralizing agent. Recent experimentation has shown that an especially preferred H-resin which forms substantially crack-free coatings may be prepared by this method in which the acid/silane ratio is greater than about 2.67:1, preferably about 6/1. Weiss et al. describe a process which comprises hydrolyzing trichlorosilane in a non-sulfur containing polar organic solvent by the addition of water or HCl and a metal oxide. The metal oxide therein acts as a HCl scavenger and, thereby, serves as a continuous source of water.

Exemplary of H-resin which is not fully hydrolyzed or condensed is that having units of the formula $HSi(OH)_x(OR)_yO_{z/2}$, in which each R is independently an organic group which, when bonded to silicon through the oxygen atom, forms a hydrolyzable substituent, x = 0-2, y = 0-2, z = 1-3, x + y + z = 3 and the average value of y over all of the units of the polymer is greater than 0. Examples of R groups in the above equation include alkyls of 1-6 carbon atoms such as methyl, ethyl and propyl, aryls such as phenyl and alkenyls such as vinyl. These resins may be formed by a process which comprises hydrolyzing a hydrocarbonoxy hydridosilane with water in an acidified oxygen-containing polar organic solvent.

The second type of silica precursor material useful herein includes hydrolyzed or partially hydrolyzed compounds of the formula $R_xSi(Z)_{4-x}$ in which R, Z and x are as defined above. Specific compounds of this type include methyltriethoxysilane, phenyltriethoxysilane, diethyldiethoxysilane, phenyltrichlorosilane, methyltrichlorosilane, methyltrimethoxysilane, dimethyldimethoxysilane, phenyltrimethoxysilane, vinyltrimethoxysilane, tetramethoxysilane, tetraethoxysilane, tetrapropoxysilane and tetrabutoxysilane. Compounds in which x = 2 are generally not used alone as volatile cyclic structures are generated during pyrolysis, but small amounts of said compounds may be cohydrolyzed with other silanes to prepare useful preceramic materials.

The addition of water to a solution of these compounds in a organic solvent results in hydrolysis or partial hydrolysis. Generally, a small amount of an acid or base is used to facilitate the hydrolysis reaction. The resultant hydrolyzates or partial hydrolyzates may comprise silicon atoms bonded to C, halogen, OH or OR groups, but a substantial portion of the material is believed to be condensed in the form of soluble Si-O-Si resins.

Additional silica precursor materials which may function equivalently in this invention include condensed esters of the formula $(RO)_3SiOSi(OR)_3$, disilanes of the formula $(RO)_xR_ySiSiR_y(OR)_x$, compounds containing structural units such as SiOC in which the carbon containing group is hydrolyzable under the thermal conditions or any other source of SiOR.

In addition to the above $SiO_2$ precursors, other ceramic oxide precursors may also be advantageously used herein either as the sole compound or in combination with the above $SiO_2$ precursors. The ceramic oxide precursors specifically contemplated herein include compounds of various metals such as aluminum, titanium, zirconium, tantalum, niobium and/or vanadium as well as various non-metallic compounds such as those of boron or phosphorous which may be dissolved in solution, hydrolyzed and subsequently pyrolyzed at relatively low temperatures and relatively rapid reaction rates to form ceramic oxides.

The above ceramic oxide precursor compounds generally have one or more hydrolyzable groups bonded to the above metal or non-metal, depending on the valence of the metal. The number of hydrolyzable groups to be included in these compounds is not critical as long as the compound is soluble in the solvent. Likewise, selection of the exact hydrolyzable substituent is not critical since the substituents are either hydrolyzed or pyrolyzed out of the system. Typical hydrolyzable groups include, but are not limited to, alkoxy, such as methoxy, propoxy, butoxy and hexoxy, acyloxy, such as acetoxy, other organic groups bonded to said metal or non-metal through an oxygen such as acetylacetonate or ar amino groups. Specific compounds, therefore,

include zirconium tetracetylacetonate, titanium dibutoxy diacetylacetonate, aluminum triacetylacetonate and tetraisobutoxy titanium.

When $SiO_2$ is to be combined with one of the above ceramic oxide precursors, generally it is used in an amount such that the final ceramic contains 70 to 99.9 percent by weight $SiO_2$.

The above preceramic compound is then formed into the desired coating. The preferred method of forming the coating comprises coating a substrate with a solution comprising a solvent and the preceramic compound or compounds followed by evaporating the solvent and heating.

If such a solution approach is used to form the coating, the preceramic solution is generally formed by simply dissolving the preceramic compound in a solvent or mixture of solvents. Various facilitating measures such as stirring and/or heat may be used to assist in the dissolution. The solvents which may be used in this method include, for example, alcohols such as ethyl or isopropyl, aromatic hydrocarbons such as benzene or toluene, alkanes such as n-heptane or dodecane, ketones, cyclic dimethylpolysiloxanes, esters or glycol ethers, in an amount sufficient to dissolve the above materials to low solids. For instance, enough of the above solvent can be included to form a 0.1-85 weight percent solution.

If hydrogen silsesquioxane resin is used, a platinum or rhodium catalysts may also be included in the above coating solution to increase the rate and extent of its conversion to silica. Any platinum or rhodium compound or complex that can be solubilized in this solution will be operable. For instance, an organoplatinum composition such as platinum acetylacetonate or rhodium catalyst $RhCl_3[S(CH_2CH_2CH_2CH_3)_2]_3$, obtained from Dow Corning Corporation, Midland, Michigan, are all within the scope of this invention. The above catalysts are generally added to the solution in an amount of between about 5 and 500 ppm platinum or rhodium based on the weight of resin.

The solution containing the preceramic compound(s), solvent and, optionally, a platinum or rhodium catalyst is then coated onto the substrate. The method of coating can be, but is not limited to, spin coating, dip coating, spray coating or flow coating.

The solvent is allowed to evaporate resulting in the deposition of a preceramic coating. Any suitable means of evaporation such as simple air drying by exposure to an ambient environment or the application of a vacuum may be used. It is to be noted that when spin coating is used, an additional drying period is generally not necessary as the spinning drives off the solvent.

Although the above described methods primarily focus on forming a preceramic coating by a solution method, one skilled in the art would recognize that other equivalent means of producing the porous ceramic coating would also function herein and are contemplated to be within the scope of this invention.

The preceramic coating is then converted to the porous ceramic coating by heating it to a temperature sufficient for ceramification without causing complete densification. Generally, the temperature is in the range of about 50 to about 800°C. depending on the pyrolysis atmosphere and the preceramic compound. For silica precursors, temperatures in the range of about 50 to about 600°C., preferably 50-400°C., are generally used. The preceramic coatings are usually subjected to these temperatures for a time sufficient to form the porous ceramic, generally up to about 6 hours, with a range of between about 5 minutes and about 2 hours being preferred.

The above heating may be conducted at any effective atmospheric pressure from vacuum to superatmospheric and under any effective oxidizing or non-oxidizing gaseous environment such as those comprising air, $O_2$, an inert gas ($N_2$, etc.), ammonia, amines, moisture, etc.

Any method of heating such as the use of a convection oven, rapid thermal processing, hot plate or radiant or microwave energy is generally functional herein. The rate of heating, moreover, is also not critical, but it is most practical and preferred to heat as rapidly as possible.

The resultant porous ceramic coating is then infiltrated with a silicone polymer. It should be noted that the expression "silicone polymer" as used herein is meant to include homopolymers, copolymers and branched or crosslinked polymers. In addition, it is contemplated that silicon monomers (eg., dimethyl dimethoxysilane) may be infiltrated into the pores and hydrolyzed in situ to form the silicone polymer. Such polymers can be in the form of a fluid or a resin and generally have the structures:

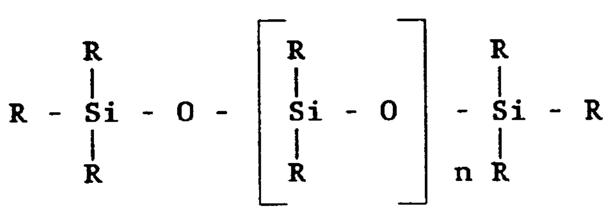

or

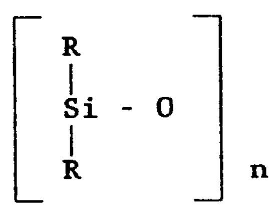

in which each R is independently a hydrogen, a hydroxyl, an alkyl such as methyl, ethyl, propyl, etc., an alkenyl such as vinyl, an aryl such as phenyl or a siloxy and n is in the range of about 0-1000. These polymers are well known in the art and can be produced by known techniques. Exemplary compounds include polydimethylsiloxanes having viscosities in the range of about 0.65 to 600,000 $mm^2/s$ (centistokes), hydroxy-terminated polydimethylsiloxane, polyphenylmethylsiloxanes, polyvinylmethglsiloxanes, vinyl-terminated polydimethylsiloxane, methylhydrogenpolysiloxanes, dimethyl, methylhydrogen polysiloxane copolymers, methyvinyl cyclosiloxanes and the like. Of the polydimethylsiloxanes, those with a viscosity in the range of about 500-10,000 $mm^2/s$ (centistokes) are particularly preferred. Polysiloxanes having lower viscosities (eg., 10-10,000 $mm^2/s$ (centistokes)) which can be cured in place are also preferred. For instance, polysiloxanes containing Si-H and/or Si-Vinyl groups can be cured with curing catalysts such as peroxides or platinum.

These silicones may be used neat or they may be dissolved in solvents for infiltration. Similarly, the polymers may be filled with other materials such as silica to aid in formation of a desirable nanocomposite. Such filler materials, however, should be sufficiently small to allow entry into the pores.

The polymers are infiltrated into the porous ceramic coating by known infiltration techniques. For instance, the ceramic may be vacuum infiltrated, high pressure infiltrated or infiltrated by solution or supercritical fluid techniques. After infiltration, any excess polymer may then be wiped off or left on the surface to provide a thicker silicone coating. If curable silicones are used, they can be cured in place with heat or any suitable curing agent or technique.

By the above methods, infiltrated ceramic nanocomposites coatings are produced. These coatings are useful on various substrates as protective coatings, as corrosion resistant and abrasion resistant coatings, as temperature and moisture resistant coatings and as a diffusion barrier against ionic impurities such as sodium and chloride.

Additional coatings may be applied over the nanocomposite coating if desired. These can include, for example, $SiO_2$ coatings, $SiO_2$/ceramic oxide layers, silicon containing coatings, silicon carbon containing coatings, silicon nitrogen containing coatings, silicon oxygen nitrogen coatings, silicon nitrogen carbon containing coatings and/or diamond like carbon coatings.

The silicon containing coating described above can be applied by methods such as (a) chemical vapor deposition of a silane, halosilane, halodisilane, halopolysilane or mixtures thereof, (b) plasma enhanced chemical vapor deposition of a silane, halosilane, halodisilane, halopolysilane or mixtures thereof or (c) metal assisted chemical vapor deposition of a silane, halosilane, halodisilane, halopolysilane or mixtures thereof. The silicon carbon coating can be applied by a means such as (1) chemical vapor deposition of a silane, alkylsilane, halosilane, halodisilane, halopolysilane or mixtures thereof in the presence of an alkane of one to six carbon atoms or an alkylsilane, (2) plasma enhanced chemical vapor deposition of a silane, alkylsilane, halosilane, halodisilane, halopolysilane or mixtures thereof in the presence of an alkane of one to six carbon atoms or an alkylsilane or (3) plasma enhanced chemical vapor deposition of a silacyclobutane or disilacyclobutane as further described in U.S. Patent No. 5,011,706. The silicon nitrogen-containing coating can be deposited by a means such as (A) chemical vapor deposition of a silane, halosilane, halodisilane, halopolysilane or mixtures thereof in the presence of ammonia, (B) plasma enhanced chemical vapor deposition of a silane, halosilane, halodisilane, halopolysilane or mixtures thereof in the presence of ammonia, (C) plasma enhanced chemical vapor deposition of a $SiH_4$ - $N_2$ mixture such as that described by Ionic Systems or that of Katoh et al. in the Japanese Journal of Applied Physics, vol. 22, #5, pp1321-1323, (D) reactive sputtering such as that described in Semiconductor International, p 34, August 1987 or (E) ceramification of a silicon and nitrogen containing preceramic copolymer. The silicon oxygen nitrogen containing coatings can be deposited by methods well known in the art such as the chemical vapor deposition, plasma enhanced chemical vapor deposition or low pressure chemical vapor deposition of a silicon compound (e.g., silane, dichlorosilane, etc.) with a nitrogen source (e.g., ammonia) and an oxygen source (e.g., oxygen, nitrogen oxides, etc.) by the pyrolysis of a silicon oxynitride precursor or by the pyrolysis of a silicon compound in an environment which results in the formation of a silicon oxynitride coating. The silicon carbon nitrogen-containing coating can be deposited by a means such as (i) chemical vapor deposition of hexamethyldisilazane, (ii) plasma enhanced chemical vapor deposition of hexamethyldisilazane, (iii) chemical vapor deposition of silane, alkylsilane, halosilane, halodisilane, halopolysilane or mixture thereof in the presence of an alkane of one to six carbon atoms or an alkylsilane and further in the presence of ammonia, (iv) plasma enhanced chemical vapor deposition of a silane, alkylsilane, halosilane, halodisilane, halopolysilane or mixture thereof in the presence of an alkane of one to six carbon atoms or an alkylsilane and further in the presence of ammonia and (v) ceramification of a preceramic polymer solution comprising a carbon substituted polysilazane, polysilacyclobutasilazane or polycarbosilane in the presence of ammonia. The diamond-like carbon coatings can be applied by exposing the substrate to an argon beam containing a hydrocarbon in the manner described in NASA Tech Briefs, November 1989 or by one of the methods described by Spear in J. Am. Ceram. Soc., 72, 171-191 (1989). The silicon dioxide coating (which

may contain a modifying ceramic oxide) is applied by the ceramification of a preceramic mixture comprising a silicon dioxide precursor (and a modifying ceramic oxide precursor) as in the initial coating.

The following non-limiting example is included so that one skilled in the art may more readily understand the invention.

Example 1

Hydrogen silsesquioxane resin made by the method of Collins et al. in U.S. Patent No. 3,615,272 was diluted to 1.25 wt.% in heptane. A platinum catalyst comprising platinum acetylacetonate in toluene was added to the solution at a concentration of approximately 100 ppm platinum based on the weight of H-resin.

Fifty CMOS 14011 devices were cleaned with a UV ozone cleaning system and then 40 microliters of the above H-resin solution was placed in the device cavity. The solvent was allowed to evaporate. The device was placed in an oxygen plasma reactor and heated to 250°C. while being treated with oxygen plasma for 3 hours. The resultant silica coating was about 2000 angstroms thick.

Ten of the above coated devices were retained as controls and 4 sets of 10 devices were infiltrated respectively with 40 microliters of 100 $mm^2/s$ (centistokes (cs)) polydimethylsiloxane (PDMS) fluid, 1000 $mm^2/s$ (cs) PDMS, a 40% toluene solution of 10,000 $mm^2/s$ (cs) PDMS and a 40% toluene solution of 600,000 $mm^2/s$ (cs) silicone gum. The devices were placed under a vacuum of 84.66 kPa (25 inches of mercury) followed by atmospheric pressure for 3 cycles and the excess fluid was wiped off. In addition, 20 CMOS 4011 devices (no ceramic coating) were coated with 40 microliters of 10,000 $mm^2/s$ (cs) PDMS.

All of the devices (including controls) were subjected to salt fog stressing in an Associated Environmental Systems Salt Fog Chamber according to the test procedure outlined in MIL-STD 883C. The devices were tested for functionality in a parametric tester. The percent of devices passing the parametric testing after 1, 3, 50, 100 and 250 hours salt fog exposure were examined. The results are summarized in Table 1. All of the controls had failed after 3 hours of exposure and all of the silicone (no ceramic coating) coated devices failed within 1 hour while all of the nanocomposites of the invention remained functional after 3 hours. All of the 1000 $mm^2/s$ (cs) fluid infiltrated samples remained functional at the end of the test at 250 hours. This example clearly demonstrates that while neither the silica nor the silicone alone provide extended salt protection, a nanocomposite of the two provided greater than a 100 fold increase in salt fog protection.

Table 1 - Percentage of Devices Functional

| Time | Ceramic Alone | 100$mm^2/s$ (cs) | 1000$mm^2/s$ (cs) | 10000$mm^2/s$(cs) | 600,000$mm^2/s$ (cs) | 10,000$mm^2/s$ (cs) Alone |
|---|---|---|---|---|---|---|
| 1 hr | 73 | 100 | 100 | 100 | 100 | 0 |
| 3 hr | 0 | 100 | 100 | 100 | 100 | 0 |
| 50 hr | 0 | 30 | 100 | 90 | 100 | 0 |
| 100 hr | 0 | 10 | 100 | 70 | 80 | 0 |
| 250 hr | 0 | 0 | 100 | 20 | 20 | 0 |

Example 2

To demonstrate that the silicone polymer is within the ceramic structure, two 2.54cm (1 inch) wafers were spin coated with a 10% solution of H-resin in a solvent comprising 95% heptane and 5% dodecane. The solution was catalyzed with platinum acetylacetonate in toluene at a concentration of approximately 100 ppm platinum based on the weight of H-resin. Both of the coated wafers were pyrolyzed as in Example 1. One wafer was infiltrated with 1000$mm^2/s$ (cs) PDMS and the surface washed by swabbing with toluene as the coated wafer was spun at 2000 RPM on a spin coater. FTIR was performed on both wafers and the results were compared. FTIR clearly shows additional Si-C peaks in the infiltrated sample, thus confirming the presence of the silicone within the ceramic structure.

Example 3

Hydrogen silsesquioxane resin made by the method of Collins et al. in U.S. Patent No. 3,615,272 was diluted to 10 wt. % in toluene. A platinum catalyst comprising platinum acetylacetonate in toluene was added to the solution at a concentration of approximately 100 ppm platinum based on the weight of H-resin.

Three 2.54 x 7.62 cm (1 x 3 inch) aluminun panels were cleaned with toluene, isopropyl alcohol and a UV ozone cleaning system. The panels were coated with the above H-resin solution and spun at 2100 rpm. The coated panels were placed in a Lindberg Furnace and heated to 400°C. for 1.5 hours.

One of the above coated panels (#3) was retained as a control, 1 panel (#1) was coated with a mixture comprising essentially 60% dimethyl, methylhydrogen siloxane copolymer, 2% methyvinyl cyclosiloxane, 23% dimethylsiloxane dimethylvinyl-terminated, 12% dimethylvinylated and trimethylated silica and a platinum catalyst and the other panel (#2) was coated with a mixture comprising essentially 59% dimethyl, methylhydrogen siloxane copolymer, 2% methyvinylcyclosiloxane, 24% dimethylsiloxane dimethylvinyl-terminated, 13% dimethylvinylated and trimethylated silica and a platinum catalyst. The panels were placed under a vacuum of 84.66 kPa (25 inches) of mercury) followed by atmospheric pressure for 3 cycles. In addition, 2 panels (no ceramic coating) were coated with the above polymer mixtures (# 4 and 5)(one mixture on each panel) and one panel was left uncoated (#6).

Panels #1 and 4 were heated to 160°C. for 20 minutes to cure the silicone polymer. Panels 2 and 5 were heated at 100°C. for 30 minutes to cure the silicone polymer.

All of the panels were subjected to salt fog stressing in an associated Environmental Systems Salt Fog Chamber with a 1% NaCl solution. The panels were placed in a horizontal position in the chamber (coated surface up). The panels were examined for corrosion by visual inspection and by optical microscopy. The panels were examined after 5, 15, 90, 160, 230, 300, 470, 640 and 1000 hours salt fog exposure were examined. The results are summarized in Table 2.

Table 2 - Appearance of Panel After Exposure to Salt Spray

| Panel | Hour | Result |
|---|---|---|
| 1 | 5 | No corrosion |
| 2 | 5 | No corrosion |
| 3 | 5 | Some possible signs of corrosion at corners and edges |
| 4 | 5 | No corrosion |
| 5 | 5 | No corrosion |
| 6 | 5 | Some signs of corrosion at top edge |
| | | |
| 1 | 15 | No corrosion |
| 2 | 15 | No Corrosion |
| 3 | 15 | Some Al pitting/corrosion - not extensive |
| 4 | 15 | Some Al pitting/corrosion - possible blistering |
| 5 | 15 | No corrosion |
| 6 | 15 | Al pitting/corrosion - not extensive but greater than other panels |
| | | |
| 1 | 90 | No corrosion |
| 2 | 90 | No Corrosion |
| 3 | 90 | Corrosion |

| | | |
|---|---|---|
| 4 | 90 | Extensive coating around edges - blistering |
| 5 | 90 | Extensive corrosion - not as extensive as 4 |
| 6 | 90 | Extensive corrosion all over |
| | | |
| 1 | 160 | No corrosion |
| 2 | 160 | No corrosion |
| 3 | 160 | Corrosion around edges |
| 4 | 160 | Extensive corrosion stemming from edges |
| 5 | 160 | Corrosion mostly at edges |
| 6 | 160 | Extensive corrosion over entire panel |
| | | |
| 1 | 230 | No corrosion |
| 2 | 230 | No corrosion |
| 3 | 230 | Corrosion mostly at edges |
| 4 | 230 | Corrosion quite extensive stemming from edges covering 40-50% of area |
| 5 | 230 | Corrosion mostly at edges |
| 6 | 230 | Covered completely with corrosion |

The panels were again examined at 300 hours. The corrosion looked similar to that at 230 hours except that the corrosion on panels 3, 4 and 5 is more pronounced.

The panels were again examined at 470 hours. The corrosion looked similar to that at 300 hours except for more pronounced differentiation.

The panels were again examined at 640 hours. No corrosion on the nanocomposites of the invention. The corrosion on all the other looked worse.

The panels were again examined at 1000 hours. The results were similar to those obtained at 640 hours. The nanocomposites of the invention survived the entire test.

## Claims

1. A ceramic nanocomposite comprising a porous ceramic coating on a substrate and, within the pores of said coating, a silicone polymer.

2. A method for forming a ceramic nanocomposite coating comprising applying a coating comprising a preceramic compound to the surface of a substrate; heating the preceramic coating to a temperature sufficient to convert it into a porous ceramic coating; and infiltrating the porous ceramic coating with a silicone polymer.

3. The method of claim 2 wherein the silicone polymer is cured after it is infiltrated into the porous ceramic structure.

European Patent Office

# EUROPEAN SEARCH REPORT

Application Number

EP 93 30 0843

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 105, no. 18, 3 November 1986, Columbus, Ohio, US; abstract no. 157806b, page 307 ; * abstract * & JP-A-61 135 741 (TAKENAKA KOMUTEN CO.) 23 June 1986 | 1-3 | C04B41/52 |
| A | CHEMICAL ABSTRACTS, vol. 105, no. 2, 14 July 1986, Columbus, Ohio, US; abstract no. 11043d, page 296 ; * abstract * & JP-A-6 158 875 (H.MIYAWAKI) 26 March 1986 | 1 | |
| A<br>D | EP-A-0 270 369 (DOW CORNING CORP.) * claim 1 *<br>& US-A-4 756 977 | 1-3 | |
| A<br>D | EP-A-0 215 132 (KITAMURA VALVE CO.) * claims 1-3 *<br>& US-A-4 932 438 | 1-3 | TECHNICAL FIELDS SEARCHED (Int. Cl.5)<br>C04B<br>C23C |

The present search report has been drawn up for all claims

| Place of search | Date of completion of the search | Examiner |
|---|---|---|
| BERLIN | 30 JUNE 1993 | BERTRAM H.E.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)